# EUROPÄISCHE PATENTANMELDUNG

(11) **EP 1 079 569 A1**
(43) Veröffentlichungstag der Anmeldung: **28.02.2001**
(21) Anmeldenummer: 99116903.8
(22) Anmeldetag: 26.08.1999
(51) Int. Cl.: H04L 12/46, H04L 29/06

(54) **Verfahren zur Übertragung von Zusatzinformationen bei der Übertragung von Datenpaketen**

(71) Anmelder: SIEMENS AKTIENGESELLSCHAFT, 80333 München (DE)
(72) Erfinder: Graf, Jürgen, 82065 Baierbrunn (DE)

(57) **Zusammenfassung**

Bei der verbindungslosen Übertragung von Datenpaketen sollen zum eigentlichen Datenpaket Zusatzinformationen mitübertragen werden. Beim Stand der Technik werden zur Lösung die Datenpakete innerhalb eines Rahmens übertragen, wobei das Rahmenformat entsprechend zu modifizieren ist. Dabei ist jedoch die Kompatibilität zu bestehenden Protokollen oder Einrichtungen in Frage gestellt. Die Erfindung löst dieses Problem, indem die Zusatzinformationen als gesonderte Steuerpakete eingefügt werden und eine Verknüpfung zwischen den Steuerpaketen und den jeweils zugeordneten Datenpaketen hergestellt wird.

## Beschreibung

Die Erfindung betrifft ein Verfahren gemäß dem Oberbegriff von Patentanspruch 1.

Bei der verbindungslosen Übertragung von Datenpaketen ist es oft wünschenswert, daß zusätzlich zum eigentlichen Datenpaket weitere Informationen mitübertragen werden. Als Datenpaket kommen hierbei z. B. ATM-Zellen oder Pakete, die nach einem Internet Protocol übertragen werden (IP-Pakete) in Frage. Diese Zusatzinformationen können beispielsweise als Informationen zum schnelleren Routen, Informationen zur Unterscheidung von Pakettypen oder MPLS labeling/ tagging Informationen ausgebildet sein. Die Zusatzinformationen sind dem jeweiligen Datenpaket fest zugeordnet.

Beim Stand der Technik werden zur Lösung dieses Erfordernisses die Datenpakete innerhalb eines Rahmens übertragen. Dieser enthält zunächst alle Information, die zur Weiterverarbeitung des Datenpakets erforderlich sind. Sollen zusätzliche/ optionale Informationen (Zusatzinformationen) mitübertragen werden, so wird entweder das Rahmenformat angepasst, oder aber im Rahmenformat optionale Felder vorgesehen, die je nach Bedarf beschrieben und ausgewertet bzw. ignoriert werden können.

Nachteilig an einer derartigen Vorgehensweise ist, daß ein vollkommen neues Protocol entwickelt werden muß, wodurch die Kompabilität zu bestehenden Protokollen oder Einrichtungen in Frage gestellt ist.

Der Erfindung liegt die Aufgabe zugrunde, einen Weg aufzuzeigen, wie Zusatzinformationen effizient den Datenpaketen mitgegeben werden können.

Die Erfindung wird ausgehend von den im Oberbegriff von Patentanspruch 1 angegebenen Merkmalen durch die im kennzeichnenden Teil angegebene Merkmale gelöst.

Vorteilhaft an der Erfindung ist insbesondere, daß die Zusatzinformationen als Steuerpakete in die Rahmenstruktur in gleicher Weise eingefügt werden wie die Datenpakete, und daß für den Übertragungsvorgang eine Verknüpfung zwischen den Steuerpaketen und den jeweils zugeordneten Datenpaketen hergestellt und mitübertragen wird.

Damit ist insbesondere eine Kompatibilität mit älteren, im Netz vorhandenen Einrichtungen gegeben, die diese optionale Verarbeitung der Zusatzinformation nicht unterstützen. Somit können diese älteren Einrichtungen problemlos mit erweiterten Einrichtungen betrieben werden, wenn die optionale Verarbeitung der Zusatzinformation nicht verwendet wird.

Ferner erleichtert oder beschleunigt diese zusätzliche Option die Weiterleitung/ Verarbeitung eines Datenpakets in erheblichem Maße. Wenn die Verarbeitung der Zusatzinformation nicht zwingend notwendig ist, wird in der Einrichtung die diese Option nicht unterstützt, lediglich das Steuerpaket verworfen, wohingegen das eigentliche Datenpaket mit der älteren aufwendigeren/ langsameren Prozedur bearbeitet wird.

Das erfindungsgemäße Verfahren ist darüberhinaus sehr flexibel im Hinblick auf die Einführung von neuen Leistungsmerkmalen und Diensten. So wird das optionale Steuerpaket nur dann verwendet, wenn dies das zugehörige Datenpaket es erforderlich macht. Insbesondere ist damit ein erheblicher Fortschritt zum Stand der Technik gegeben, da dort mit dem festen Rahmenformat die Felder für die optionale Zusatzinformation immer vorgehalten werden müssen, wodurch zur mangelnden Kompatibilität mit älteren Einrichtungen noch der Nachteil eines Dynamikverlustes beim Übertragungsvorgang hinzukommt. Ob die Datenpakete konstante oder variable Länge aufweisen, spielt bei der Erfindung keine Rolle.

Vorteilhafte Weiterbildungen der Erfindung sind in den Unteransprüchen angegeben.

Die Erfindung wird im folgenden anhand eines figürlich dargestellten Ausführungsbeispieles näher erläutert.

Es zeigen:
- Fig 1: die für den Übertragungsvorgang erforderliche Rahmenstruktur mit IP-Paketen und Steuerpaketen
- Fig 2: die sendeseitig erforderlichen Einrichtungen zum Multiplexen von IP-Paketen, denen eine Zusatzinformation mitgegeben wird
- Fig 3: die empfangsseitg erforderlichen Einrichtungen zum Demultiplexen dieser IP-Pakete
- Fig 4: die sendeseitig erforderlichen Einrichtungen zum Multiplexen von IP-Paketen, denen lediglich zum Teil eine Zusatzinformation mitgegeben wird
- Fig 5: die empfangsseitg erforderlichen Einrichtungen zum Demultiplexen dieser IP-Pakete.

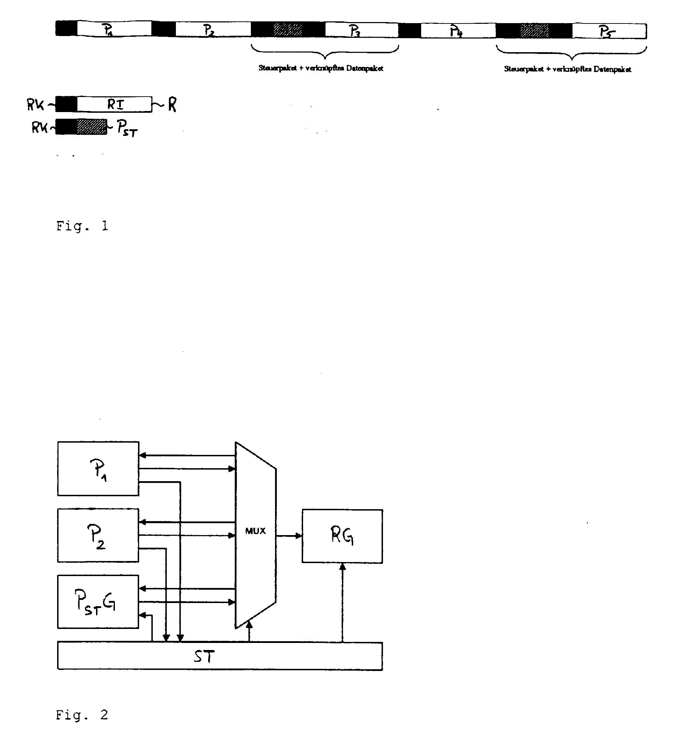

In Fig. 1 ist aufgezeigt, wie die Datenpakete mit Zusatzinformationen gemäß der vorliegenden Erfindung übertragen werden. Die Datenpakete sollen hierbei als IP-Pakete P ausgebildet sein. Gemäß Fig. 1 ist ein Strom von 5 IP-Paketen P₁.. ..P₅ aufgezeigt. Die IP-Pakete P₃, P₅ sollen mit Zusatzinformationen übertragen werden, die dem betreffenden IP-Paket direkt zugeordnet sind. Die IP-Pakete P₁...P₅ werden in einer Rahmenstruktur R übertragen. Jeder Rahmen R wird aus einem Rahmenkopf RK und einem Rahmeninformationsfeld RI gebildet. Die Größe des Rahmens R ist abhängig von der Größe des IP-Pakets.

Die Zusatzinformationen werden nun in spezielle Steuerpakete P_{ST} eingefügt. Die Steuerpakete P_{ST} werden in das Rahmeninformationsfeld RI eines Rahmens R eingefügt. Im Rahmenkopf RK erfolgt eine Markierung dahingehend, daß dieser Rahmen R keine Nutzdaten sondern ausschließlich Zusatzinformationen enthält. Damit sind die Rahmen besonders gekennzeichnet.

Sollen nun Zusatzinformationen für ein bestimmtes IP-Paket wie z. B. P₃ oder P₅ übertragen werden, so wird sendeseitig ein spezielles Steuerpaket P_{ST} geformt und in die Rahmenstruktur R eingefügt. Erfindungsgemäß wird nun eine Verknüpfung zwischen diesem Steuerpaket P_{ST} und dem IP-Paket P₃, P₅ hergestellt, so daß die Zuordnung Steuerpaket - IP-Paket empfangsseitig leicht ermittelt werden kann.

Bei vorliegendem Ausführungsbeispiel wird diese Zuordnung dadurch hergestellt, daß unmittelbar nach dem Steuerpaket P_{ST} der Rahmen R folgt, der das betreffende IP-Paket z. B. P₃ oder P₅ enthält. Damit ist eine eindeutige Zuordnung gegeben.

In einer Ausgestaltung der Erfindung ist vorgesehen, die Verknüpfung zwischen Steuerpaket P_{ST} und dem zugeordneten IP-Paket z. B. P₃ oder P₅ auf andere Weise durchzuführen. Hierzu wird beispielsweise vorgesehen, z.B. durch Vergabe einer Paketnummer, die dem Steuerpaket mitgegeben wird, die Verknüpfung vorzunehmen.

Weiterhin kann in dem ein IP-Paket aufnehmenden Rahmen R eine Markierung darüber geführt werden, ob diesem Rahmen ein Steuerpaket führender Rahmen vorausgeht. Dies ist insofern von Bedeutung, da im Verlustfall des Steuerpaketes dieser Umstand dann ermittelt und entsprechende Reaktionen eingeleitet werden können. So kann beispielsweise in diesem Fall das IP-Paket verworfen werden, falls die Zusatzinformation zwingend erforderlich war. Eine alternative Verarbeitung kann ebenso vorgenommen werden.

In Fig. 2 ist beispielhaft aufgezeigt, wie IP-Pakete verschiedener Quellen auf eine Übertragungsstrecke gemultiplext werden können. Hierzu müssen die IP-Pakete in der Sendeeinrichtung gemultiplext und in der Empfangsrichtung entsprechend demultiplext werden. Hierbei wird davon ausgegangen, daß jedem IP-Paket eine Zusatzinformation mitgegeben wird.

Gemäß Fig. 2 sind eingangsseitg Pufferspeicher P₁, P₂ vorgesehen. Diese erhalten eingangsseitig die von den betreffenden Quellen ausgehenden IP-Pakete. Einer Steuereinrichtung ST wird gemeldet, ob sich ein IP-Paket im Pufferspeicher befindet oder nicht. Ist dies der Fall, wird das IP-Paket einer Multiplexeinrichtung MUX zugeführt, welche den Weitergabevorgang steuert. Eine Einrichtung P_{ST}G generiert den Inhalt für das Steuerpaket P_{ST}. Im Falle des Multiplexens erhält der Inhalt eine Kennzeichnung der Herkunft (Pufferspeicher) des darauffolgenden IP-Paketes. Die Information darüber, aus welchem Pufferspeicher welches IP-Paket als nächstes folgt, erhält die Multiplexeinrichtung MUX von der Steuereinrichtung ST. Diese gibt den Inhalt des Steuerpacketes (Steuerinformation) an die Multiplexeinrichtung MUX weiter.

Die Multiplexeinrichtung MUX multiplext die verschiedenen Eingangssignale paketweise (d.h. es wird jeweils das komplette IP-Paket weitergegeben oder die komplette Steuerinformation). Ferner werden die IP-Pakete und Steuerpakete P_{ST} zur Rahmengenerierung an eine Einrichtung RG weitergereicht. Diese Vorgänge werden von der Steuerungeinrichtung ST gesteuert, die die Auswahl der betreffenden Pufferspeicher vornimmt.

Von der Einrichtung RG werden die IP-Pakete bzw. die Steuerpakete in die Rahmenstruktur eingefügt. Ferner werden hier die Pakete als Steuer- oder IP-Pakete im Rahmenkopf markiert. Die hierzu notwendige Information wird von Steuereinrichtung ST geliefert.

Die Steuereinrichtung ST steuert die Einrichtung P_{ST}G, die Multiplexeinrichtung MUX und Einrichtung RG sowie die richtige Abfolge von IP-Paket und Steuerpaket. Ferner wird von der Steuereinrichtung ST der Einrichtung P_{ST}G mitgeteilt, welches IP-Paket als nächstes übertragen wird. Diese Information wird benötigt, um im Steuerpaket die entsprechende Quelle des folgenden Datenpakets zu hinterlegen.

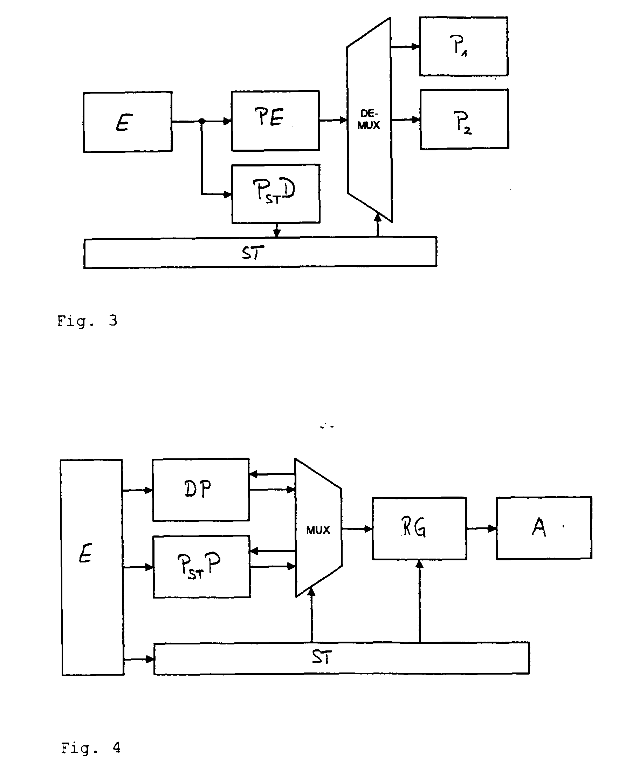

In Fig. 3 ist aufgezeigt, wie die gemäß Fig. 2 auf die Übertragungsstrecke gemultiplexten IP-Pakete wieder demultiplext werden.

Eingangsseitig werden die Rahmen mit den IP-Paketen und Steuerpaketen in einer Einrichtung E aufgenommen und an Einrichtungen PE und P_{ST}D weitergereicht.

In der Einrichtung PE wird die Rahmenstruktur entfernt und die IP-Pakete einer Demupltiplexeinrichtung DEMUX weitergereicht.Eventuell vorhandene Steuerpakete werden nicht weitergeleitet.

In der Einrichtung P_{ST}D wird ermittelt, ob ein Steuerpaket angekommen ist und in diesem Fall ausgewertet. Weiterhin wird von hier eine Information an eine Steuereinrichtung ST weitergereicht, wohin das folgende IP-Paket geleitet werden soll.

In der Demultiplexeinrichtung DEMUX werden nach Maßgabe der von der Steuereinrichtung ST erhaltenen Information die IP-Pakete an die entsprechende Puffereinrichtung weitergeleitet.

Die Pufferspeicher P₁, P₂ erhalten von der Demultiplexeinrichtung DEMUX die IP-Pakete der Quellen 1 und 2. Die Demultiplexeinrichtung DEMUX wird von der Steuereinrichtung ST gesteuert, die auch die Pufferspeicher P₁, P₂ auswählt. Diese werden von der Demultiplexeinrichtung DEMUX angesteuert.

Mit den in den Figuren 2, 3 aufgezeigten Konfigurationen können Datenpakete im Mischbetrieb übertragen werden. So kann ein Teil der Pakete als ATM-Zellen und der verbleibende Teil als IP-Pakete ausgebildet sein. Beide Pakettypen werden dann an die jeweiligen Routereinrichtungen hingeleitet.

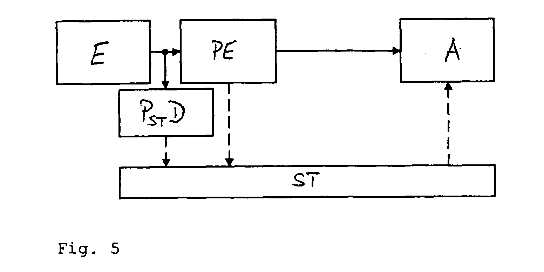

In Fig. 4 ist ein weiteres Ausführungsbeispiel aufgezeigt. Hierbei wird davon ausgegangen, daß lediglich einem Teil der IP-Pakete eine Zusatzinformation mitgegeben wird. Als Zusatzinformation kommen MPLS labels, dynamisches Routing, Unterstützung mehrerer Layer 2 Protokolle oder Quality of Service in Betracht.

Die ankommenden IP-Pakete bzw. Steuerpakete werden von einer eingangsseitig angeordneten Einrichtung E entgegengenommen und den nachfolgend angeordneten Einrichtungen DP, P_{ST}P, ST zugeführt. Existiert zu einem IP-Paket ein Steuerpaket P_{ST}, so wird dies der Steuereinrichtung ST mitgeteilt.

Die der eingangsseitig angeordneten Einrichtung E nachfolgend angeordneten Einrichtungen sind die Datenpaket-Puffereinrichtung DP und die Steuerpaket-Puffereinrichtung P_{ST}P.Beide Einrichtungen speichern das IP-Paket/ Steuerpaket bis zum Abruf von der Multiplexeinrichtung MUX.

Beiden zuletzgenannten Einrichtungen ist eine Multiplexeinrichtung MUX nachgeschaltet,von der die IP-Pakete und Steuerpakete P_{ST} paketweise gemultiplext (d.h. es wird jeweils das komplette IP-Paket weitergegeben oder die komplette Steuerinformation) und an eine Rahmengenerierungseinrichtung RG weitergeleitet werden. Das Abholen der Pakete aus den Pufferspeichern wird von der Multiplexeinrichtung MUX gesteuert. Der ausgewählte Pufferspeicher wird von der Steuereinrichtung ST bestimmt.

In der Rahmengenerierungseinrichtung RG werden die IP-Pakete bzw. die Steuerpakete in die Rahmenstruktur eingebunden. Weiterhin werden hier die Pakete als Steuer- oder IP-Pakete markiert. Die Information hierzu wird von der Steuereinrichtung ST geliefert.

Von der Steuereinrichtung ST werden die Multiplexeinrichtungen MUX und die Rahmengenerierungseinrichtung RG gesteuert. Ebenso ist sie für die richtige Abfolge von IP-Paket und Steuerpaket verantwortlich. Falls eine Steuerinformation für ein IP-Paket existiert, wird zuerst das Steuerpaket gebildet und gesendet und direkt danach das zugehörige IP-Paket. Andernfalls wird nur das IP-Paket gesendet. Abschließend werden IP-Paket und Steuerpaket einer ausgangsseitigen Einrichtung A zugeführt.

In Fig. 5 sind die empfangsseitig angeordneten Einrichtungen aufgezeigt.

Demgemäß werden die IP-Pakete oder die dazugehörigen Steuerpakete von einer eingangsseitig angeordneten Einrichtung E aufgenommen und einer nachfolgend angeordneten Einrichtung PE sowie P_{ST}D zugeführt.

In der Einrichtung PE wird der Übertragungsrahmen entfernt und die IP-Pakete bzw. die Steuerpakete an eine ausgangsseitig angeordnete Einrichtung A weitergeleitet.

In der Einrichtung P_{ST}D wird erkannt, ob ein Steuerpaket angekommen ist. Hierzu wird der Steuereinrichtung ST eine Information, daß das aktuelle Paket ein Steuerpaket ist, zugeleitet.

Von der Steuereinrichtung ST wird ferner der ausgangsseitig angeordneten Einrichtung A mitgeteilt, ob das aktuelle Paket ein IP-Paket oder ein Steuerpaket ist.

Mit den in den Figuren 4, 5 aufgezeigten Konfigurationen können ebenfalls Datenpakete im Mischbetrieb übertragen werden. Allerdings wird hier lediglich ein Teil der Datenpakete mit einer Zusatzinformation versehen. So können hier dann Dienste wie Voice over IP realisiert werden. Der Sprachinformation kann hierzu entsprechende Zusatzinformation mitgegeben werden. Demzufolge werden die die Sprachinformationen übertragenden IP-Pakete über sehr kurze Wege geführt.

Ebenso kenn hier eine Ersatzschaltung im Fehlerfall vorgenommen werden. So wird beispielsweise davon ausgegangen, daß eine erste Sendeeinrichtung über einen ersten Übertragungsweg einer ersten Empfangseinrichtung IP-Pakete zuführt. In gleicher Weise sollen von einer zweiten Sendeeinrichtung über einen zweiten Übertragungsweg einer zweiten Empfangseinrichtung IP-Pakete zugeführt werden. Wird nun der erste Übertragungsweg unterbrochen, müssen entsprechende Umschaltevorgänge sende - und empfangsseitg vorgenommen werden. Ferner wird nun eine entsprechende Routinginformation als Zusatzinformation den IP-Paketen der ersten Sendeeinrichtung oder der zweite Sendeeinrichtung oder beiden Sendeeinrichtungen mitgegeben. Die IP-Pakete werden dann über den zweiten Übertragungsweg der ersten Empfangseinrichtung zugeführt.

## Patentansprüche

1. Verfahren zur Übertragung von Zusatzinformationen bei der Übertragung von Datenpaketen, mit
einer Mehrzahl von Datenpaketen (P₁..Pₙ),die von einer Sendeeinrichtung über ein Kommunikationsnetz einer Empfangseinrichtung zugeführt werden, wobei die Datenpakete (P₁...Pₙ) sendeseitig in eine, einen Rahmenkopf (RK) und ein Rahmeninformationsfeld (RI) aufweisende Rahmenstruktur (R) eingefügt werden,
**dadurch gekennzeichnet**,
daß die Zusatzinformationen als Steuerpakete (P_{ST}) in die Rahmenstruktur (R) in gleicher Weise eingefügt werden wie die Datenpakete (P₁...Pₙ),
daß für den Übertragungsvorgang eine Verknüpfung zwischen den Steuerpaketen (P_{ST}) und den jeweils zugeordneten Datenpaketen (P₁...Pₙ) hergestellt und mitübertragen wird.

2. Verfahren nach Anspruch 1,
**dadurch gekennzeichnet**,
daß die Verknüpfung während des Übertragungsvorganges durch die zeitliche Anordnung des Steuerpaketes (P_{ST}) zu dem jeweils zugeordneten Datenpaket (P₁...Pₙ) im Übertragungstahmen gegeben ist.

3. Verfahren nach Anspruch 1,
**dadurch gekennzeichnet**,
daß die Verknüpfung während des Übertragungsvorganges durch Vergabe einer Paketnummer gegeben ist, die dem Steuerpaket (P_{ST}) im jeweils zugeordneten Rahmenkopf (RK) mitgegeben wird.

4. Verfahren nach Anspruch 1 bis 3,
**dadurch gekennzeichnet**,
daß zusätzlich eine Markierung im Datenpakete (P₁...Pₙ) aufnehmenden Rahmeninformationsfeld (RI) vorgenommen wird, mit der gekennzeichnet wird, ob das betreffende Datenpaket (P₁.. ..Pₙ) mit einem Steuerpaket (P_{ST}) verknüpft ist.

5. Verfahren nach einem der vorstehenden Ansprüche,
**dadurch gekennzeichnet,**
daß eine weitere Markierung im Rahmenkopf (RK) eines jeden Rahmens vorgenommen wird, mit dem gekennzeichnet wird, daß im Rahmeninformationsfeld (RI) dieses Rahmens (R) Steuerpakete (P_{ST}) oder Datenpakete (P₁...Pₙ) übertragen werden.

6. Verfahren nach einem der vorstehenden Ansprüche,
**dadurch gekennzeichnet,**
daß die Datenpakete als Pakete ausgebildet sind, die nach einem Internet Protocol übertragen werden (IP-Paket).

7. Verfahren nach einem der vorstehenden Ansprüche,
**dadurch gekennzeichnet,**
daß die Datenpakete (P₁...Pₙ) variable Länge aufweisen.

8. Verfahren nach einem der Ansprüche 1 bis 5,
**dadurch gekennzeichnet,**
daß die Datenpakete als ATM-Zellen ausgebildet sind.

9. Verfahren nach einem der vorstehenden Ansprüche,
**dadurch gekennzeichnet,**
daß die Zusatzinformationen als MPLS-Labels und /oder MPLS-Tags ausgebildet sind.

10. Verfahren nach einem der vorstehenden Ansprüche,
**dadurch gekennzeichnet,**
daß die Zusatzinformationen als Priorisierungs - und/ oder Routinginformationen ausgebildet sind.

11. Verfahren nach einem der vorstehenden Ansprüche,
**dadurch gekennzeichnet**, daß die Datenpakete verschiedener Sendeeinrichtungen über lediglich eine Übertragungsstrecke der entsprechenden Empfangseinrichtung zugeführt werden.

12. Verfahren nach einem der vorstehenden Ansprüche,
**dadurch gekennzeichnet,**
daß im Fehlerfall eine Ersatzschaltung der Übertragungswege durch Vergabe von Routinginformationen vorgenommen wird.
